(19)

**Europäisches Patentamt**

**European Patent Office**

**Office européen des brevets**

(11)  **EP 4 676 079 A1**

(12) **EUROPEAN PATENT APPLICATION**

(43) Date of publication:
07.01.2026  Bulletin 2026/02

(21) Application number: 24382709.4

(22) Date of filing: **01.07.2024**

(51) International Patent Classification (IPC):
*H04N 25/47* <sup>(2023.01)</sup>    *H04N 25/46* <sup>(2023.01)</sup>

(52) Cooperative Patent Classification (CPC):
**H04N 25/47; H04N 25/46**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Consejo Superior de Investigaciones
Científicas
(CSIC)
28006 Madrid (ES)**

(72) Inventors:
• **Serrano Gotarredona, Teresa
41092 Sevilla (ES)**
• **Linares Barranco, Bernabé
41092 Sevilla (ES)**

(74) Representative: **Herrero & Asociados, S.L.
Edificio Aqua - Calle Agustín de Foxá, 4-10, 2ºA
28036 Madrid (ES)**

(54)  **SENSITIVE DYNAMIC VISION SENSOR (DVS) AND METHOD FOR VISION SENSING**

(57)    Sensitive Dynamic Vision Sensor comprising multiple physical pixels, each comprising: a photoreceptor module configured to amplify and duplicate a voltage representing the detected light; a contrast computation module configured to reset the voltage and to launch events; a first and second pixel memory bits, connected to neighbor pixels to share its voltage; and a switch $s_{wr}$ configured to disable the contrast computation module; being the physical pixels arranged as macro pixels, each comprising: a master pixel configured not to share voltage with other pixels and to launch events, and the rest of pixels configured to share its voltage with the master pixel, which launches an event when the combined voltage is over a LR-temporal contrast, and a controller configured to set the rest of pixels: in a LR-region, switch $s_{wr}$ is activated, or in a HR-region, switch $s_{wr}$ is deactivated, launching events when the voltage is over a HR-temporal contrast.

EP 4 676 079 A1

**Description**

**OBJECT OF THE INVENTION**

The invention is related to the field of vision sensing, more particularly to DVS cameras.

The object of the invention is a DVS sensor which allows to perform foveation by computing temporal contrast on pixels individually and on macro pixels. Also, allows to compute different temporal contrasts for low-resolution and for high-resolution, simultaneously.

Another object of the invention is a method for vision sensing which uses the DVS sensor defined.

**BACKGROUND ART**

Dynamic Vision Sensors (DVS) are a novel type of vision sensors that operate similarly to a biological retina. A biological retina does not produce sequences of frames or images. A biological retina is continuously and dynamically sending nervous spikes to the virtual cortex, transmitting a flow of spiking events that represent the dynamically changing visual scene. A cell (or pixel) in the retina only sends a spike when there is meaningful information to transmit, like a change of light. A DVS pixel will send out its (x,y) coordinate when it detects a relative change of light above a given "temporal contrast" level.

Dynamic Vision Sensors (DVS) are radically different vision sensors with respect to imagers. In a DVS there are no images. Consequently, foveation techniques used in imagers cannot be directly used or mapped to DVS cameras.

In a DVS, pixels whose light change by a relative amount, called temporal contrast, send out off chip their (x,y) coordinate. Output is sparse and represents the continuous dynamic scene change. On the other hand, imagers produce images every fixed time step. Each pixel is represented by its incident light or luminance. Imagers generate full images every time step.

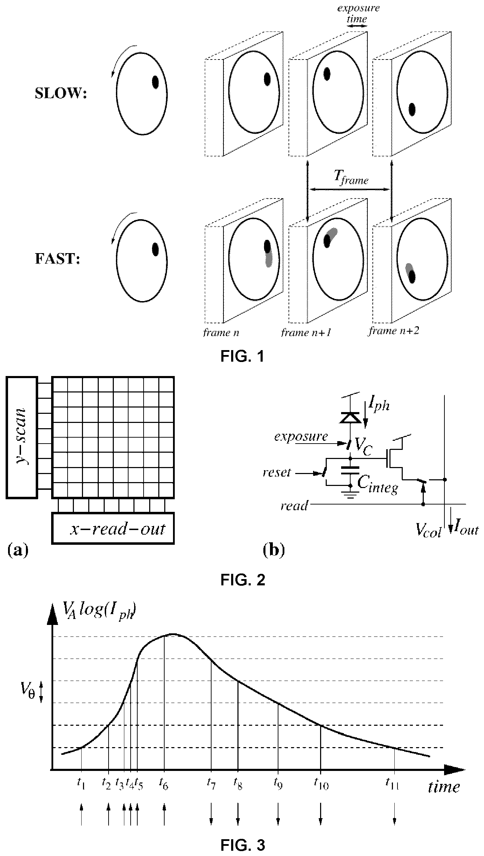

Fig. 1 represents the operation of conventional frame-based cameras. Every time *Tframe* a new frame or image is provided. Each image is generated by having each pixel in the sensor integrate (accumulate) light (this is, the photo current delivered by a photo diode) during a given "exposure time". This is typically done by using capacitors. Fig. 1 illustrates the images captured by such a camera observing a rotating white disk with a black dot close to its border. If the disk rotates slowly, each frame will capture a clear black dot at different positions. However, if the disk rotates faster so that during the camera's "exposure time" the black dot has moved a significant distance, the frames will capture the dots with a blurred tail.

Fig. 2 illustrates a simplified concept of a conventional imager. First of all, an imager generates a full luminance image every given time interval called $T_{frame}$. One way of doing this is by using a pixel circuit similar to the one shown in Fig. 2(b). Each pixel contains a capacitor $C_{integ}$ (physical or parasitic) that integrates photo current $I_{ph}$ between the instant it is reset by signal "reset" and the instant exposure stops by de-activating signal *"exposure"*. Depending on the amount of charge accumulated onto capacitor $C_{integ}$ during this exposure interval, a given luminance dependence voltage $V_C$ will be hold at capacitor $C_{integ}$. This voltage is transformed into a high current by activating row signal "read' and setting sufficiently low column voltage $V_{col}$. This way, each pixel in a row provides an output current $I_{out}$ that depends on the temporarily hold voltage $V_C$. Consequently, all $V_C$ voltages in a row can be read out in parallel. As explained, imagers read out full images every $T_{frame}$, thus producing a constant and maximum flow of information representing plain pixel luminance, independently of scene dynamics.

In a DVS, pixels do not accumulate light (or photo current) during an exposure time. Photo current is monitored continuously and when it has changed by a given relative amount, called "temporal contrast", the pixel will produce a new spike. This spike is sent off-chip with sub- microsecond delay by giving the (x,y) coordinate of the pixel within the pixel array and sign bit that specifies whether light has increased or decreased by a given percent.

Foveation is the technique by which part of the visual field is captured at high resolution, while the rest is captured at low resolution.

Foveation in imagers is done by combining pixels into macro-pixels and averaging the luminance of their individual pixels. For this, all pixels need to sense their individual luminance. For the selected fovea regions, which remain in high resolution (HR), every pixel keeps its individual luminance level, which is communicated off chip for this frame. For the rest of the image outside any fovea region, pixels are grouped in macro-pixels by averaging the luminance of its individual pixels, and this reduced information is communicated off chip for this frame. Consequently, in imagers, first a full high-resolution image is captured inside the chip, which is somehow processed to communicate off chip with different resolutions depending on the selected fovea regions.

In foveated imagers, pixel circuit does not require any modification with respect to a non-foveated imager implementation. Instead of that, pixel grouping and averaging is performed by a peripheral circuitry, and a reduced information is sent off-chip.

In DVS camera, there are no images. No full high-resolution luminance image is captured and processed in the chip. In a DVS, pixels have to be combined within the pixel array to compute temporal contrast either on individual pixels or on combined macro-pixels.

## DESCRIPTION OF THE INVENTION

The invention relates to a sensitive Dynamic Vision Sensor (sDVS) configured to generate events on detecting a relative amount of light variation.

The sensitive DVS sensor of the invention allows to compute temporal contrast on grouped macro-pixels by interconnecting specific nodes of a specific photoreceptor circuit within a DVS pixel.

The sensitive Dynamic Vision Sensor (sDVS) of the invention is configured to generate events when there is a pre-set relative amount of light variation.

Each event comprises pixel coordinates and a polarity (ON, OFF).

The sensitive Dynamic Vision Sensor (sDVS) of the invention also allows to define fovea regions, regions with high-resolution, and regions with low-resolution.

The sensitive Dynamic Vision Sensor (sDVS) of the invention comprises a plurality of physical pixels, and each physical pixel comprises:

- a photoreceptor module (p) comprising:

  ○ a photoreceptor stage comprising a transistor $M_{p1}$ and configured to transform a received light into a voltage $V_{ph}$;
  ○ a trans-impedance preamplification stage connected to the photoreceptor and comprising one or more stacked diodes configured to amplify the received voltage, and one or more transistors configured to provide the voltage $V_{ph}$ to the stacked diodes and to duplicate said voltage $V_{ph}$;

- a contrast computation module (c) comprising:

  ○ a buffer stage connected to the trans-impedance preamplification stage;
  ○ an amplification stage connected to the buffer stage, comprising two capacitors ($C_1$ and $C_2$) and configured to amplify the received voltage by a relationship $C_1/C_2$ between the capacitance value of the two capacitors and to reset the voltage to $V_{REF}$ when the amplified voltage $V_{diff}$ reaches an upper temporal contrast or a lower temporal contrast; and
  ○ a differentiation stage connected to the amplification stage and configured to launch an ON event when the voltage $V_{diff}$ reaches the upper temporal contrast and an OFF event when the voltage $V_{diff}$ reaches a lower temporal contrast;

In this case, a LR upper temporal contrast and a LR lower temporal contrast are defined for LR regions and a HR upper temporal contrast and a HR lower temporal contrast are defined for HR regions.

In the sensitive Dynamic Vision Sensor (sDVS) of the invention the physical pixels are arranged as macro pixels.

For adding control elements to the pixels, each pixel also comprises:

- a first pixel memory bit, connected to a first neighbor pixel and configured to receive and share the duplicated pre-amplified voltage from the transistor of the trans-impedance preamplification stage;
- a second pixel memory bit connected to a second neighbor pixel and configured receive and share the duplicated pre-amplified voltage from the transistor of the trans-impedance preamplification stage; and
- a switch $s_{wr}$ configured to reset continuously the capacitor $C_2$ of the contrast computation module, disabling said contrast computation module for not launching events;

Also, in each macro pixel it is defined:

- a master pixel configured to not share information with other pixels by deactivating the first and second pixel memory bits and configured to launch events by deactivating the switch $s_{wr}$, and
- the rest of pixels.

The rest of pixels in the macro pixel are configured to share its pre-amplified voltage from the trans-impedance preamplification stage with the master pixel by activating the first and/or second pixel memory bits such that the contrast computation module of the master pixel receives a summed voltage from the rest of pixels of the macro pixel and when the summed voltage reaches the LR upper temporal contrast or the LR lower temporal contrast an event is launched.

Thus, the rest of pixels share its pre-amplified voltage between them, adding in each step the voltage detected by its photoreceptor stage. By sharing the rest of pixels its pre-amplified voltage between them the pixels close to the master pixel would provide to said master pixel the summed voltage from all the rest of pixels of the macro pixel.

The sensitive Dynamic Vision Sensor (sDVS) of the invention further comprises a controller configured to define the state of one or more of the rest of pixels to be:

- in a LR region, wherein the switch to reset is activated, disabling the contrast computation module for not launching events; or
- in a HR region, wherein the switch to reset is deactivated, enabling the contrast computation module to launch events when the voltage received from the trans-impedance preamplification stage reaches the HR upper temporal contrast or the HR lower temporal contrast.

The temporal contrast for LR regions and the temporal contrast for HR regions could be set to be the same.

Preferably, the photoreceptor stage of the pixels could also comprise an inverting voltage amplifier.

Also, the one or more transistors of the trans-impedance preamplification stage could be two transistors ($M_{local}$ and $M_{share}$) connected to the first and second pixel memory bits and to the contrast computation module (c) and configured to duplicate the voltage $V_{ph}$. Preferably, said transistors of the trans-impedance preamplification stage conform a Serrano current mirror

In such a case, the sensitive Dynamic Vision Sensor (sDVS) of the invention could also comprise a switch $s_{wla}$ and a switch $s_{wlb}$ connected to the transistor (Mlocal) and configured to activate or deactivate the first and second pixel memory bits.

The sensitive DVS sensor of the invention could further comprising a switch $comm_l$ connected to the switch $s_{wr}$ and configured to activate or deactivate the contrast computation module (c).

Preferably, the photoreceptor converts the incident radiation firstly into a continuous photo-current ($I_{ph}(t)$) and then to a logarithmic voltage representation as:

$$V_{ph}(t) \ = \ A_v log(I_{ph}(t))$$

The sensitive DVS sensor of the invention could also comprise an asynchronous digital communication circuit connected to an external circuitry and configured to send pixel events out of the sensitive DVS sensor using an Address Event Representation (AER) format.

Moreover, the sensitive DVS sensor could further comprise a Row Arbiter and a Row Buffer, connected to the asynchronous digital communication circuit of the pixels, and an external communication module, connected to the Row Arbiter and the Row Buffer.

In said case, the pixel event is sent by:

- when at least one event is launched in a pixel, sending a row-wise $R_{gst}$ signal to the *Row Arbiter,* which is configured to determine the y-coordinate of said row and to reply by activating an *Ack* signal,
- sending all active pixels in the row a polarity signal ($p^+$ or $p^-$) to the *Row Buffer,* which is configured to store x-coordinates, and
- sending the x-coordinates, the polarity and the y-coordinate to the external communication module, which is configured to send them out of the sensitive DVS sensor.

The sensitive DVS sensor of the invention is configured to send out address events with micro to milli second delays.

Moreover, the sensitive DVS sensor of the invention could further comprise a Classifier module and two output channels, a LR channel, providing absolute coordinates of LR macro-pixels (x, y, s), and a HR channel, providing relative coordinates within the HR region (x-$x_L$, y-$y_L$, s). In this case, the Classifier module comprises HR region limit coordinates and is configured to determine if an Address-Event (x,y,s) is in the HR region or LR region.

In some implementations, the two output channels could be merged and, in this case, the Address-Event (x,y,s) further comprises a parameter 'r' to distinguish whether the event belongs to the LR region or HR region.

The invention also relates to a method for vision sensing which comprises the steps of:

- sensing light and converting it to voltage $V_{ph}$ by using the photoreceptor stage;
- pre-amplifying the received voltage by using the trans-impedance preamplification stage;
- duplicating the pre-amplified voltage by using the trans-impedance preamplification stage;
- if the pixel is not a master pixel, the switch $s_{wla}$ is OFF and the switch $s_{wlb}$ is ON, sending one of the duplicated voltages to the first and second pixel memory bits;
- if the pixel is a master pixel, the switch $s_{wla}$ is ON and the switch $s_{wlb}$ is OFF, receiving a signal from the first and second pixel memory bits of one or more neighbor pixels generating a combined voltage, representing the sum of photocurrents from the rest of pixels of the macro pixel;

- if the pixel is not a master pixel, amplifying the other duplicated voltage by using the one or more stacked diodes of the trans-impedance preamplification stage;
- if the pixel is a master pixel, amplifying the combined voltage from the rest of pixels of the macro pixel;
- sending the amplified voltage to the buffer stage if the pixel is a master pixel, the switch $s_{wr}$ is set permanently ON, or if the pixel is not a master pixel and switch $s_{wr}$ is ON, otherwise, if the switch $s_{wr}$ is OFF, resetting the amplified voltage;
- sending the amplified voltage to the amplification stage of the contrast computation module (c);
- amplifying the voltage by $C_1/C_2$;
- resetting the voltage to $V_{REF}$ whenever the voltage $V_{diff}$ reaches an upper threshold $V^+$ or a lower threshold $V^-$; and
- launching a sending of event by the differentiation stage: an ON event when the voltage $V_{diff}$ reaches an upper threshold $V^+$ and an OFF event when the voltage $V_{diff}$ reaches a lower threshold $V^-$;

The method for vision sensing defined could comprise two versions of the global bias signals $V_{REF}$:

$$\left(V_{REF_{LR}}, V_{\theta LR}^+, V_{\theta LR}^-\right)$$ and $$\left(V_{REF_{HR}}, V_{\theta HR}^+, V_{\theta HR}^-\right)$$. Thus, if the signal coming out of the first or second pixel memory bits (T OR R) is high, the HR version biases $$\left(V_{REF_{HR}}, V_{\theta HR}^+, V_{\theta HR}^-\right)$$ is selected for the comparators in the contrast computation circuit and, if the signal coming out of the first or second pixel memory bits (T OR R) is low, the LR version biases $$\left(V_{REF_{LR}}, V_{\theta LR}^+, V_{\theta LR}^-\right)$$ is selected.

The method of the invention allows to compute different temporal contrast levels for the overall low-resolution scene and the selected high-resolution fovea areas.

Additionally, the disclosed method allows to simultaneously compute the low-resolution temporal contrast of the full low-resolution visual scene and the temporal contrast of selected high-resolution fovea regions.

**DESCRIPTION OF THE DRAWINGS**

Figure 1 shows an illustration of conventional video frame-based camera capturing a rotating disk with a dot, wherein each frame needs an exposure time, such that when disk rotation is slow, the frames capture a still dot, and when the dot changes position during the exposure time, blurring appears in the captured frames.

Figure 2 shows a (a) generic imager pixel array and periphery, (b) a possible physical pixel diagram of a generic imager.

Figure 3 illustrates events generation by an individual pixel, such that every time the voltage varies over a pre-defined threshold, a spike (or event) is generated. If the variation is upwards, an ON event is produced, otherwise an OFF event is produced.

Figure 4 shows a slow and fast motion of rotating black dot. Black filled points in (x,y,t) represent OFF events in the corresponding pixels, and white filled points in (x,y,t) represent ON events in the corresponding pixels. In the fast motion case, the same events are produced but at a faster speed without loss of information nor blurring.

Figure 5 shows a block diagram of a DVS pixel.

Figure 6 shows an example of two types of DVS photoreceptor circuit.

Figure 7 shows an example of a change detector circuit (CD).

Figure 8 shows an example of the operation of a CD circuit.

Figure 9 shows an example of overall physical architecture of a DVS sensor.

Figure 10 shows an example of a sensitive DVS pixel circuit, with a stacked-diodes pre-amplification stage.

Figure 11 shows a (a) DVS pixel array in Low-Resolution (LR) mode, where physical pixels are grouped into macro pixels, each macro-pixel comprising 3x3 physical pixels. (b) When configured as LR macro-pixel, the 'p' part of all physical pixels is combined, and all 'c' parts are disabled, except one of them (in this example, the top right one), which computes the contrast of the full LR macro-pixel. (c) When configuring a region in High-Resolution (HR), the macro-pixels in this region are un-grouped and each physical pixel uses its own 'c' part to compute contrast of its own 'p' part.

Fig. 12 shows a modified pixel circuit to allow interconnection to neighboring top and/or right pixel for macro-pixel grouping, while disabling the contrast computation part 'c'.

Figure 13 shows an illustration of peripheral control modules to handle AER events sent from the pixels.

Figure 14 shows a modified pixel according to the invention which allows simultaneous event generation of LR and HR events within foveas.

Figure 15 shows an illustration of the motion of a fovea in an arrangement of pixels.

Figure 16 shows a block diagram of a pixel according to the present invention.

## PREFERRED EMBODIMENTS OF THE INVENTION

The present invention relates to a DVS sensor configured to send events when there is a variation in light intensity greater than a threshold. The DVS sensor of the invention allows to simultaneously compute a low-resolution temporal contrast of the full low-resolution visual scene and a high-resolution temporal contrast of selected high-resolution fovea regions.

As explained before, the DVS sensor of the invention is not an imager, thus, the term "imager" in the context of the invention is not used for referring to a DVS. Also, the output produced by a DVS sensor is not an "image".

A typical DVS pixel is composed of:

1) photoreceptor stage that converts continuously incident light into a continuous photo current $I_{ph}(t)$ which is then converted into a continuous logarithmic voltage representation $V_{ph}(t) = A_v log(I_{ph}(t))$.

2) a change detector stage that generates an output event when $|V_{ph}(t)|$ has changed by a given amount $|V_\theta|$. If the event has been produced by an increase in photo current, it is an ON event. If it has been produced by a decrease in photo current, it is an OFF event.

3) And an asynchronous digital communication circuit that interacts with circuitry at the periphery of the pixel array to send pixel events out of the chip using an Address Event Representation (AER) format. This way, the output of a DVS camera is a flow of address events (x,y,p) with the pixel coordinate and polarity (ON or OFF) of the pixels that have noticed a change of light above a temporal contrast (LR upper temporal contrast, LR lower temporal contrast, HR upper temporal contrast or HR lower temporal contrast) since a previous event. Address events are sent off chip with micro to milli second delays since they were detected by the pixel, depending on ambient light.

Fig. 3 illustrates this concept for one single DVS pixel. A conventional frame-based camera would sample each pixel every time $T_{frame}$ and accumulate the photo current during an "exposure time". If the light on the pixel stays constant, the pixel would deliver the same information every $T_{frame}$, consuming communication energy continuously, and making subsequent image processing systems consume energy for every frame. However, a DVS camera only sends off-chip information of the changes. The pixel in Fig. 3 sends out a positive event when

$$V_A \, log \left( \frac{I_{ph}(t_{n+1})}{I_{ph}(t_n)} \right) = V_\theta;$$

*or*

$$\frac{I_{ph}(t_{n+1})}{I_{ph}(t_n)} = e^{\frac{V_\theta}{V_A}} = 1 - C^+$$

with $V_A$, $Ve > 0$, or sends out a negative event when

$$V_A \, log\left(\frac{I_{ph}(t_{n+1})}{I_{ph}(t_n)}\right) = -V_\theta;$$

or

$$\frac{I_{ph}(t_{n+1})}{I_{ph}(t_n)} = e^{\frac{V_\theta}{V_A}} = 1 - C^-$$

where C+ and C - are a positive and negative temporal contrast, respectively.

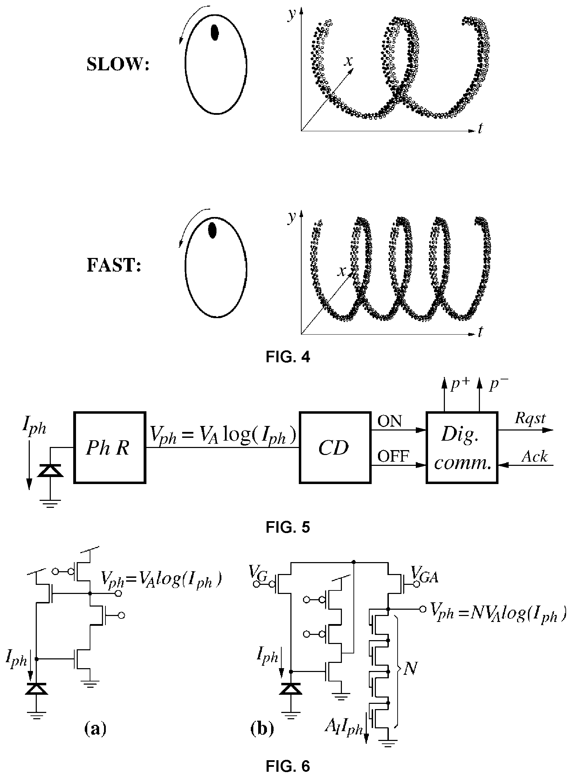

Fig. 4 illustrates the events captured by a DVS sensor observing a rotating white disk with a black dot close to its border. The DVS sensor produces a flow of output signed address events (x,y,p) with sub-microsecond time resolution. In Fig. 3 a negative event is represented by a filled black dot in *(x,y,t)* position. This means that pixel (x,y) experienced the transition from the white background to the black rotating dot at time *t*. Similarly, an unfilled dot in Fig. 4 indicates that pixel (x,y) experienced the transition from the dark dot to the white background at time t.

Therefore, DVS sensors only send information for the pixels whose luminance has changed beyond a given temporal contrast. This way, a DVS sensor provides just the information of moving edges and textures, thus significantly reducing information flow, as well as computational burden on subsequent vision processing and computing stages. Furthermore, output address events become available at sub-microsecond delays, opening new avenues for very high-speed dynamic scene analyses. On the contrary, imagers need to wait a time $T_{frame}$ to first expose all pixels a given exposure time and to second transmit the full frame off-chip.

As explained, DVS concept is radically different from said conventional imagers. A DVS sensor includes fairly complex pixels, as opposed to conventional imagers. A DVS pixel consist typically of three parts, as shown in Fig. 5, photoreceptor *(Ph R)*, change detector (CD), and digital communication (*Dig. comm.)* circuits:

1. A photoreceptor module *(Ph R)* that transforms instantaneous and continuous light (or photo current of its photo diode) *Iph(t)* into a continuous voltage proportional to its logarithm:

$$V_{ph}(t) \;=\; A_v log(I_{ph}(t))$$

Some photoreceptor circuits used in DVS pixels are shown in Fig. 6. Fig. 6(a) shows an example of photoreceptor circuit, while Fig. 6(b) shows a sensitive DVS (sDVS) photoreceptor circuit.

The sDVS (sensitive-DVS) is a variation of the DVS pixel, which adds an intermediate pre-amplification stage based on a stacked-diode trans-impedance amplification, which introduced negligible-mismatch amplification, yielding to a 10x contrast sensitivity improvement, while requiring smaller pixel area.

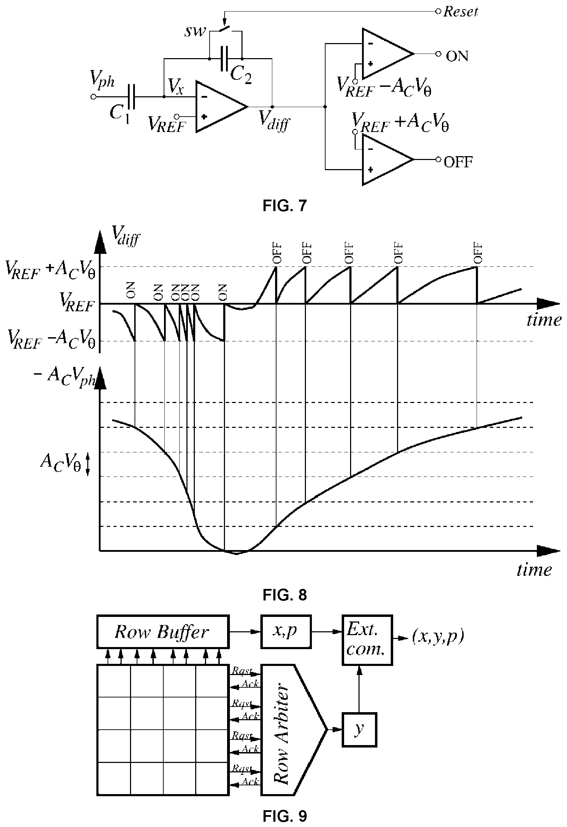

2. A change-detector (CD) circuit, that activates a digital "ON" or "OFF" signal whenever voltage $V_{ph}$ has increased or decreased by $V_\theta$, respectively, as illustrated in Fig. 3. A typical change-detector (CD) circuit is shown in Fig. 7, using idealized differential amplifiers. In practice, these differential amplifiers are implemented with highly simplified circuits. The operation of the change-detector (CD) circuit is illustrated in Fig. 8. The input signal $V_{ph}$, shown in Fig. 3, is amplified and inverted by a gain

$$A_C = -\frac{c_1}{c_2}.$$

However, this amplified version $V_{diff}$ is reset to $V_{REF}$ whenever it reaches either $V_{REF}\text{-}A_C V_\theta$ or $V_{REF}\text{+}A_C V_\theta$, activating either signals ON or OFF, respectively, which triggers the *Reset* signal, discharging capacitor $C_2$. This way, when $V_{ph}$ is increasing ($-A_C V_{pn}$ is decreasing), ON events are generated whenever $V_{ph}$ increases by an amount $V_\theta$, or OFF events are generated whenever $V_{ph}$ decreases by an amount $V_\theta$.

3. The asynchronous communication digital circuit is known in the art. Basically, it is in charge of communicating with a peripheral row arbiter, shown in Fig. 9. The asynchronous communication digital circuit sends a row-wise $R_{gst}$ signal to the row arbiter whenever the ON or OFF comparators are activated. Thus, the row arbiter knows the y-coordinate of the $R_{gst}$ signal. Then, the arbiter replies by activating a corresponding *Ack* signal. When the *Ack* signal is received, all pixels that are active in the row will send up to the *Row Buffer* either a p+ or p- active signal, as shown in Fig. 9, depending on whether comparator ON or OFF has been activated.

The *p+* or *p-* active signals are latched in the buffer, storing the x-coordinates with the polarity p of the active pixels. These signed x-coordinates, together with the arbiter y-row-coordinate will be sequenced off-chip by a circuit *"Ext. com.*

The DVS sensor of the invention is also configured to perform a foveation technique. This technique allows to capture part of the visual field at high resolution, while the rest of the visual field is captured at low resolution. For example, human eyes have this property, which allows to significantly reduce information flow and data processing requirements within the visual cortex.

In a DVS camera the sensing process is radically different from frame-based imagers. There are never images nor frames. Consequently, it is not possible to average the luminance information of neighboring pixels within a *macro-pixel.* Furthermore, in a DVS camera, the output information is not the luminance, but the relative change of luminance. Thus, for generating LR *macro-pixels,* it would be necessary to compute the relative luminance change for the light impinging in all HR pixels with the LR *macro-pixel.*

One possible solution could be to externally collect the address events whose addresses fall within a *macro-pixel.* However, this would not reduce the event communication flow with respect to a full HR version. Additionally, accumulating the relative change spikes of all individual HR pixels, does not represent the relative luminance change of one equivalent *macro-pixel.* For example, in a case wherein all HR pixels within a LR *macro-pixel* are subject to exactly the same change of luminance, each HR pixel sends out n events. In this case, the full *macro-pixel* is also subject to the same relative change of luminance and thus should also send out only n events for the full *macro-pixel.* Furthermore, this solution will not allow to use different temporal contrast settings for the HR individual pixels than for the LR *macro-pixels.*

One solution to perform pixel grouping in a DVS camera is to short-circuit the output of all the HR pixels photodiodes within a *macro-pixel,* and use the rest of photoreceptor, change detector, and asynchronous digital communication circuitry of only one master HR pixel within the *macro-pixel.* This way, the master pixel would compute relative changes of the sum of photo diode currents $\Sigma_i I_{phi}$ of all HR pixels within the *macro-pixel.* However, directly shorting neighboring photo diodes has several problems. On one hand, DVS pixels are large, which would lead to long lines interconnecting the photo diodes, introducing significant parasitics for the photo currents, which can be as small as femto amperes, thus penalizing speed response of photoreceptor circuits. On the other hand, adding switches interconnecting neighboring photo diodes will add important parasitic leakage currents, which may become comparable to the actual photo diode currents, specially under low light conditions.

Another possibility could be, for example, to add the voltages $V_{ph}(t) = A_v log(I_{ph}(t))$ of neighboring pixels. This could be done, for example, by shorting node $V_x$ in Fig. 7 among neighboring pixels. However, this would compute $\Sigma_i \log (I_{phi}) = \log (\Pi_i I_{phi})$ and not $\log (\Sigma_i I_{phi})$, which is what is needed for a macro-pixel. Additionally, this would introduce important parasitic leakage currents to the highly leakage-sensitive node Vx.

Another possibility could be to add the voltages in a sensitive DVS sensor. In this case, the output voltage of the photoreceptor module is amplified by a mismatch-less factor N as $V_{ph}(t) = NA_v log(I_{ph}(t))$, being N the number of stacked diode-connected NMOS transistors. By shorting node $V_{ph}$ (in Fig. 6b) among neighboring photoreceptors, the resulting voltage is given by

$$V_{ph}|_{macro-pixel} = NV_A \log (I_{phi})$$

In this way, it is possible to compute relative light changes on grouped pixels into one macro-pixel with equivalent photo current $\Sigma_i I_{phi}$. Furthermore, shorting node $V_{ph}$ among neighboring pixels has the advantage that this node is driven by an amplified version of each pixel photo current $A_I I_{phi}$, where gain $A_I$ typically ranges over several orders of magnitude. This will compensate the impact of leakage currents and long line interconnection parasitic.

Thus, for performing foveation in DVS sensors, the photoreceptor circuits of neighboring pixels are interconnected instead of interconnecting directly the photodiode nodes.

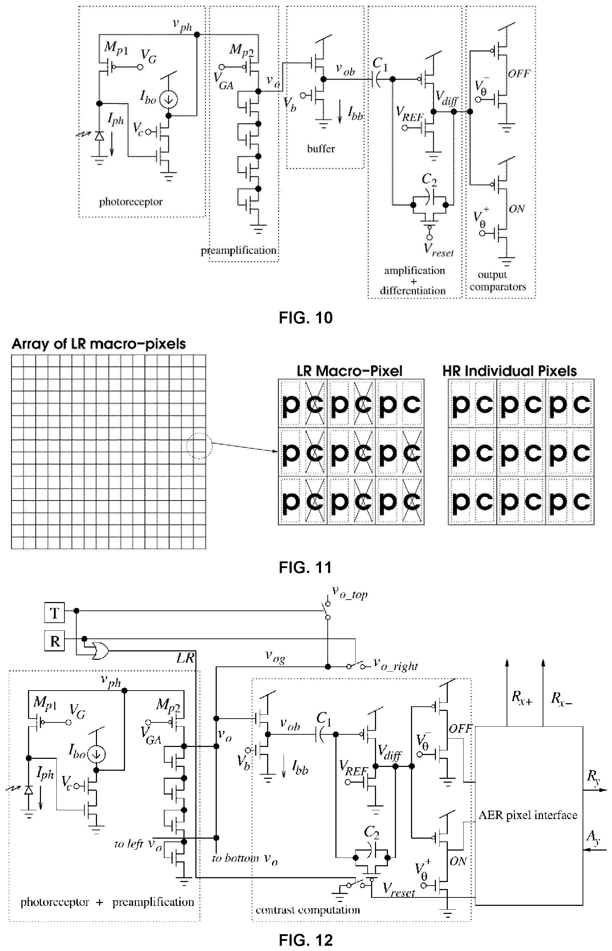

Fig. 10 shows an exemplary embodiment of a pixel schematics comprising one 4-transistor stacked-diode trans-impedance pre-amplification stage. This preamplification stage multiplies by *N,* wherein N is number of stacked diodes, the previous voltage amplification path gain, given by a capacitive ratio $C_1/C_2$.

Since the DVS contrast sensitivity is inversely proportional to this voltage path gain, such sensitivity is improved by the mismatch-less integer N. It is possible to also cascade more of such pre-amplification stages to further increase the gain, which allows to rely on smaller capacitor ratios $C_1/C_2$, thus reducing pixel area.

This trans-impedance-based preamplification stage in Fig. 10 has a different photoreceptor stage than the presented in Fig. 6(a).

The DVS sensor comprises a pMOS transistor $M_{p2}$ for providing an input current to the trans-impedance amplification stage. Transistor pair $M_{p1}$-$M_{p2}$, together with the inverting voltage amplifier biased by $I_{bo}$, constitute an active input current mirror (Serrano Current Mirror) whose current amplification factor $A_I$ is exponentially controlled by a voltage difference *VGA-VG,* as shown in Fig. 10.

This way, the very small photocurrent $I_{ph}$ sensed by the photodiode can be easily amplified a few orders of magnitude before feeding the trans-impedance preamplification stage. The current amplification factor $A_I$ suffers from inter-pixel mismatch, but this mismatch does not affect the DVS contrast computation.

The operation of the pixel is as follows:

Photodiode current $I_{ph}(t)$ is amplified by the Serrano current mirror to $A_I \times I_{ph}(t)$ at the output of $M_{p2}$. This current crosses the diode-connected NMOS transistor stack. The voltage drop at each diode-connected transistor is proportional to the log of this current plus some offset voltage. Consequently, preamplifier output voltage $v_o(t)$ is proportional to $N \times log(A_I \times I_{ph}(t))$ plus some other offset voltage. Since the log of products can be decomposed into sum of logs, $v_o(t)$ is proportional to $N \times log(I_{ph}(t))$, and the $A_I$ dependence can be incorporated into the offset term.

The buffer introduces a gain approximately equal to '1', so that $v_{ob}(t)$ is equal to $N \times log(I_{ph}(t))$ plus some other constant offset voltage. The amplification and differentiation (also called *"change detector"* CD) stage amplifies $v_{ob}(t)$ by $C_1/C_2$ and resets it to $V_{REF}$ whenever digital signal $V_{reset}$ is activated. This way, $V_{diff}(t)$ is proportional to $C_1/C_2 \times N \times log(I_{ph}(t))$ and is reset to $V_{REF}$ whenever $V_{diff}(t)$ reaches either an upper threshold $V^+$ (controlled by $V^+$) or a lower one $V^-$ (controlled *by $V^-$*).

Consequently, two consecutive resets, one at $t_{i-1}$ and the next at $t_i$, satisfy $\Delta V_{diff} = |V_{diff}(t_i) - V_{diff}(t_{i-1})|$, with $\Delta V_{diff} = |V^+ - V_{REF}| = \Delta V^+$ if the upper threshold was reached, or $\Delta V_{diff} = -|V^+ - V_{REF}| = \Delta V^-$ if the lower threshold was reached. In the former case, the pixel generates a positive ON event, while in the latter a negative OFF one.

Since $V_{diff}(t) = C_1/C_2 \times N \times log(I_{ph}(t))$ plus some offset term

$$\Delta V^{+/-} = C_1/C_2 \ x \ N \ x \ log(\frac{I_i}{I_{i-1}})$$

where simplified notation $I_i = I_{ph}(t_i)$ is used. Depending on whether $\Delta V^{+/-}$ is positive or negative, the equation can be rewritten as

$$\frac{I_i}{I_{i-1}} = exp\left(\frac{\Delta V^+}{\frac{C_1}{C_2} \ x \ N}\right) = 1 + C^+ \quad if \ I_i > I_{i-1} \quad (positive \ event)$$

$$\frac{I_i}{I_{i-1}} = exp\left(\frac{\Delta V^-}{\frac{C_1}{C_2} \ x \ N}\right) = 1 + C^- \quad if \ I_i < I_{i-1} \quad (negative \ event)$$

$C^{+}$ and $C^-$ are the positive and negative temporal contrast, respectively, which are controlled by $V_\theta^+$ and $V_\theta^-$, respectively, as well as $V_{REF}$. $C^+$ and $C^-$ can be tuned to be equal, in which case both are a temporal contrast C of the DVS.

The DVS pixel in Fig. 10 can be separated into two parts:

    a) The part comprised by the "photoreceptor" and "preamplification" stages in Fig. 11, called 'p', and

    b) the part comprised by the "buffer", the "amplification and differentiation", and "comparator" stages in Fig. 11, which conforms the contrast computation part, called 'c'.

Fig. 11 illustrates conceptually how these 'c' and 'p' parts are configured to group DVS pixels into macro-pixels for operation in Low-Resolution (LR), and how they are configured for standard High-Resolution (HR).

By default, the full array is set to LR and physical pixels are grouped into macro-pixels. When grouped into macro-pixels (see Fig. 11b) the **'p'** parts of all physical pixels are combined, so that $v_o$ of the macro-pixel (let's call it $v_{og}$) is proportional to $N \times log(\Sigma I_{phi}(t))$, while all **'c'** parts are disable, except one.

This single **'c'** part will receive the combined $v_{og}$ of the macro-pixel and compute the contrast on it.

Fig. 12 shows a modified pixel version (let's call it EF-pixel, where EF stands for 'Electronic Foveation') with respect to the one in Fig. 10, that includes disabling of the **'c'** part and sharing node $v_o$ with top and/or right neighbors. For this, the pixel includes two memory bits: 'T' (connect to top pixel if set) and 'R' (connect to right pixel if set).

If either of the two memory bits is set to 1, the **'c'** part is disabled by constantly resetting capacitor C2 and thus constantly freezing the contrast computation part. For the macro-pixel in Fig. 11b the top-right pixel would be set to T=R=0 and its 'c' part will handle the contrast computation of the macro-pixel. For the other pixels in the top row, their setting would be T=0, R=1. For the other pixels in the right column, T=1, R=0. And for the rest T=R=1.

As soon as a macro-pixel is selected to be part of a foveated region (or 'Region of Interest', ROI) all their pixels are set quickly to High-Resolution (HR) mode by setting T=R=0 for all of them. Since the fovea region will be, in general, moving over the visual field, the DVS sensor of the invention could comprise a controller that keeps setting and unsetting the 'T' and 'R' bits of the pixels within the macro-pixels that go in and out of foveas.

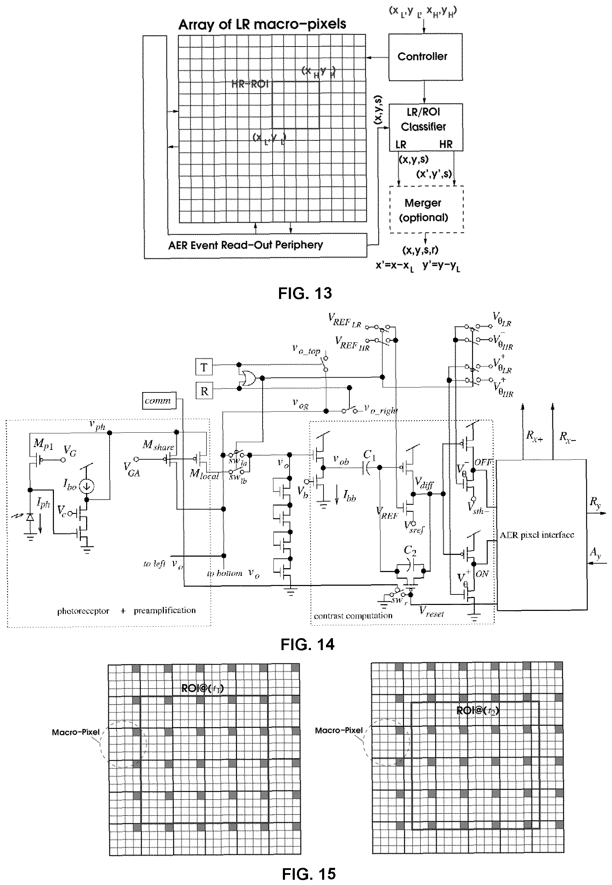

A possible option is illustrated in Fig. 13. The 'Controller' is in charge of setting/unsetting T/R switches as pixels are grouped/ungrouped as macro-pixels. The controller receives continuously updates of the fovea through coordinate parameter ($x_L$, $y_L$, $x_H$, $y_H$). The 'AER Event Read-Out Periphery' circuitry extracts the active pixels in the traditional way a DVS would operate. For each pixel with an active 'c' part that produces an event, this circuitry would provide its absolute coordinate and event polarity as an Address-Event (x,y,s). This absolute-coordinate event is sent to a "Classifier" module, which also knows the presently active fovea limit coordinates, and sends out the event through two output channels:

- The LR channel, providing the absolute coordinates of LR macro-pixels (x, y, s).
- The HR channel, providing relative coordinates within the fovea ($x-x_L$, $y-y_L$, s).

Optionally these two channels could be merged into a single one and add an extra parameter to the event 'r' to distinguish whether the event belongs to the LR full array or the fovea.

For the case of simultaneously active multiple foveas, both the 'Controller' and 'Classifier' need to be capable of handling multiple foveas, the Classifier would need to have several HR output channels or add the extra tag 'r' to distinguish among them, and the optional 'Merger' could be either removed, adapted, or have multiple of them. All this will depend on how the events will be sent off-chip and how many AER output channels are feasible.

In the foveation method described so far, the pixels within a macro-pixel region (whether active or not) either send events individually (if in HR mode) or only the top-right pixel sends events (if in LR mode). This produces two flows of events:

- One for the HR foveated regions
- And one for the full LR array but excluding all HR regions.

Thus, this implementation has the drawback that relative light changes can only be computed on either grouped *macro-pixels* (LR), or un-grouped individual pixels (HR), but not on both simultaneously. Once a fovea HR region is established, the LR *macro-pixel* relative variation for that region is lost and not available anymore. This poses a great challenge to the post-DVS computing system observing the LR visual scene and in charge of identifying and tracking regions of interest to be set in HR. This could be a potential problem for quickly and efficiently tracking foveas, once they are identified and activated.

To overcome this potential problem, the EF-pixel circuitry could be modified as shown in Fig. 12. In Fig. 12, the LR macro-pixel is always sending out the LR event information, whether or not it has been set for HR within a fovea. This implies that for a physical pixel, its photocurrent is duplicated.

This way, if this pixel belongs to an active fovea, one of the replicas can be used for its local pixel-level HR contrast computation and the other replica can be used for sharing at the macro-pixel level and compute LR contrast. Fig. 14 shows an exemplary embodiment of this implementation. The original Serrano current-mirror output transistor $M_{p2}$ in Fig. 12 is duplicated into transistors $M_{share}$ and $M_{local}$. This will add some mismatch, but this has no implications since, as explained, the Serrano current mirror output gain $A_I$ has no impact on the contrast computation.

In the modified EF-pixel, bits 'T' and 'R' are set initially according to the desired Low-Resolution and are never changed (unless one wants to change the low resolution of the overall full scene). This way, the amplified photocurrent replica provided by transistor $M_{share}$ is always sent to the top and/or right pixel within the pre-defined macro-pixels to always compute the LR contrast.

In this implementation, the DVS sensor comprises an additional memory bit *'comm'* which changes dynamically depending on whether the macro-pixel enters/leaves a fovea. The operation of the master pixel within a macro-pixel differs from the rest, resulting:

a) Operation of pixels which are not the master pixel within a macro-pixel For these pixels one or both of bits 'T' and 'R' are always set to '1'. Therefore, '$sw_{Ia}$,' is OFF and '$sw_{Ib}$,' is ON, so that the local pixel photocurrent signal (from $M_{local}$) is always sent to the local contrast computing circuit. If the additional bit memory *comm*='0', then this pixel belongs to a macro-pixel that does not belong to any fovea, and thus should be silent. Therefore switch '$sw_r$' is ON and the 'c' part is always reset and cannot compute contrast nor send out events. On the other hand, if *comm*='1' it means the pixel belongs to a fovea and should generate HR events. Therefore, '$sw_r$' is OFF and the pixel is computing contrast using the local pixel-only photocurrent coming from $M_{local}$.

b) Operation of the master pixels within a macro-pixel For these pixels it is always 'T=R=0', set initially. Also, for these pixels one has to set always *comm='1'*, and leave it unchanged. Consequently, these pixels are never to be updated by the peripheral circuitry. Under these conditions, *'sw_la'* is always ON and *'sw_lb'* is always OFF. Consequently, the '**c**' part computes contrast from the collected photocurrent of all pixels within its macro-pixel and the reset switch 'sw,' is OFF.

Unfortunately, master pixels do not participate in the HR mode of an active fovea, being silent for the HR event flow. This is however a mild problem, as the fovea has sufficient information from the majority of pixels. Additionally, in practice, the fovea region is continuously moving and thus these silent pixels change place within the fovea, so that their transient inactivity reflects as a type of noise within the fovea.

This is illustrated in Fig. 15, where the fovea region is moved by HR precision (not LR). On the other hand, if fovea regions move at LR, the silent HR pixels inside the fovea would stay at fixed positions always, as in Fig. 15a.

Optionally, for the EF-pixel in Fig. 14, it is possible to revert back to the case in which the fovea regions do not send LR events, but all send HR events. There are two ways:

a) In first way, one just needs to set one or both of the 'T'/'R' bits of the top-right pixel (within a macro-pixel) to '1'. In this case, this master pixel would also use the local photocurrent only coming out of $M_{local}$ for contrast computation. However, now the $M_{share}$ replica is routed to neighbor pixels $v_{og}$ nodes. In this case, one can route all $M_{share}$ replicas within a fovea to the most master pixel of the full fovea and make only this one silent within the complete fovea by setting its *com* bit '0'. This way, all pixels within the fovea are sending now HR events, except for only the top right pixel of the full fovea. In this approach, when the fovea moves, one needs to change the settings of the macro-pixels master pixel that enter/leave a fovea, as well as the *com* bit of all pixels that enter/leave a fovea.

b) In a second way, one can set both of the 'T'/'R' bits of all the pixels within a fovea to '0'. In this case, all pixels in a fovea use only their local photocurrent coming out of $M_{local}$ for contrast computation. Also, for all pixels within the fovea, their *com* bit is set to '1'. This way, all pixels within the fovea are sending now HR events. In this approach, one needs to change the settings for all pixels that enter/leave a fovea.

In case the LR mode resolution can be decided and kept fixed before chip fabrication, it is possible to make a more compact pixel by hardwiring it. In this case, memory bits 'T' and 'R' would not be required, as well as the switches they control. The layout of the physical pixels would vary slightly, depending on the required values for the hardwired 'T' and 'R'.

When processing the full LR visual field or a selected HR region, it is very likely they may require different contrast threshold settings.

In this case, as shown in Fig. 14, the HR pixel array could have two versions of the global bias signals $V_{REF}$,

$$\left(V_{REF_{LR}}, V_{\theta LR}^{+}, V_{\theta LR}^{-}\right) \quad \text{and} \quad \left(V_{REF_{HR}}, V_{\theta HR}^{+}, V_{\theta HR}^{-}\right)$$ . Then, the signal coming out of the OR gate (T OR R), if high, should select the HR version biases $\left(V_{REF_{HR}}, V_{\theta HR}^{+}, V_{\theta HR}^{-}\right)$ for the comparators in the contrast computation circuit.

Otherwise, the LR version biases $\left(V_{REF_{LR}}, V_{\theta LR}^{+}, V_{\theta LR}^{-}\right)$ should be used. These contrast selectors are always set and do not change when moving the fovea.

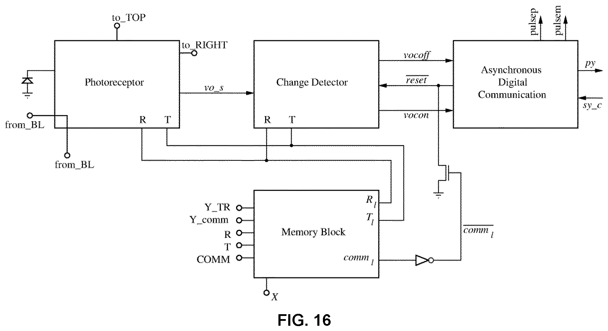

The DVS sensor defined could be implemented as a full pixel circuit, as shown in Fig. 16. In the top part are shown the three sub-circuits discussed so far: the photoreceptor, the CD, and the asynchronous digital communication circuit. The bottom part shows the memory block sub-circuit, which stores the local bit values $R_l$, $T_l$, and signal *comm_l*, which enables event communication for this pixel.

Therefore, if it is disabled ($\overline{comm_l}$ is high), *reset* is permanently active ($\overline{reset}$ is low), preventing any communication by the digital communication block.

## Claims

1. A sensitive Dynamic Vision Sensor (sDVS) configured to generate events on detecting a relative amount of light variation, comprising each event: pixel coordinates and a polarity (ON, OFF), and configured to define fovea regions with high-resolution and regions with low-resolution, and comprising a plurality of physical pixels each one comprising:

   - a photoreceptor module (p) comprising:

     ○ a photoreceptor stage comprising a transistor $M_{p1}$ and configured to transform a received light into a voltage

$V_{ph}$;

○ a trans-impedance preamplification stage connected to the photoreceptor and comprising one or more stacked diodes configured to amplify the received voltage, and one or more transistors configured to provide the voltage $V_{ph}$ to the stacked diodes and to duplicate said voltage $V_{ph}$;

- a contrast computation module (c) comprising:

○ a buffer stage connected to the trans-impedance preamplification stage;
○ an amplification stage connected to the buffer stage, comprising two capacitors ($C_1$ and $C_2$) and configured to amplify the received voltage by a relationship $C_1/C_2$ between the capacitance value of the two capacitors and to reset the voltage to $V_{REF}$ when the amplified voltage $V_{diff}$ reaches an upper temporal contrast or a lower temporal contrast; and
○ a differentiation stage connected to the amplification stage and configured to launch an ON event when the voltage $V_{diff}$ reaches the upper temporal contrast and an OFF event when the voltage $V_{diff}$ reaches a lower temporal contrast;

wherein a LR upper temporal contrast and a LR lower temporal contrast are defined for LR regions and a HR upper temporal contrast and a HR lower temporal contrast are defined for HR regions, and wherein the physical pixels are arranged as macro pixels, each pixel further comprising:
- a first pixel memory bit, connected to a first neighbor pixel and configured to receive and share the duplicated pre-amplified voltage from the transistor of the trans-impedance preamplification stage;
- a second pixel memory bit connected to a second neighbor pixel and configured receive and share the duplicated pre-amplified voltage from the transistor of the trans-impedance preamplification stage; and
- a switch $s_{wr}$ configured to reset continuously the capacitor $C_2$ of the contrast computation module, disabling said contrast computation module for not launching events;

and wherein each macro pixel comprises:

- a master pixel configured not to share its voltage with other pixels by deactivating the first and second pixel memory bits and configured to launch events by deactivating the switch $s_{wr}$, and
- the rest of pixels; and

wherein the rest of pixels in the macro pixel are configured to share its pre-amplified voltage from the trans-impedance preamplification stage with the master pixel by activating the first and/or second pixel memory bits such that the contrast computation module of the master pixel receives a combined voltage representing the sum of photocurrents from the rest of pixels of the macro pixel and when the combined voltage reaches the LR upper temporal contrast or the LR lower temporal contrast an event is launched,
and wherein the sensitive Dynamic Vision Sensor (sDVS) further comprises a controller configured to define the state of one or more of the rest of pixels to be:

- in a LR region, wherein the switch to reset is activated, disabling the contrast computation module for not launching events; or
- in a HR region, wherein the switch to reset is deactivated, enabling the contrast computation module to launch events when the voltage received from the trans-impedance preamplification stage reaches the HR upper temporal contrast or the HR lower temporal contrast.

2. The sensitive DVS sensor according to claim 1, wherein the photoreceptor stage also comprises an inverting voltage amplifier.

3. The sensitive DVS sensor according to claim 2, wherein the one or more transistors of the trans-impedance preamplification stage are two transistors ($M_{local}$ and $M_{share}$) connected to the first and second pixel memory bits and to the contrast computation module (c) and configured to duplicate the voltage $V_{Ph}$.

4. The sensitive DVS sensor according to claim 1, further comprising a switch $s_{wla}$ and a switch $s_{wlb}$ connected to the transistor ($M_{local}$) and configured to activate or deactivate the first and second pixel memory bits.

5. The sensitive DVS sensor according to claim 1, further comprising a switch $comm_l$ connected to the switch $s_{wr}$ and configured to activate or deactivate the contrast computation module (c).

6. The sensitive DVS sensor according to claim 1, wherein the photoreceptor converts incident radiation into a continuous photo-current and then to a logarithmic voltage representation as:

$$V_{ph}(t) = A_v log(I_{ph}(t))$$

7. The sensitive DVS sensor according to claim 1, wherein the transistors of the trans-impedance preamplification stage conform an active input current mirror.

8. The sensitive DVS sensor according to claim 1, further comprising an asynchronous digital communication circuit connected to an external circuitry and configured to send pixel events out of the sensitive DVS sensor using an Address Event Representation (AER) format.

9. The sensitive DVS sensor according to claim 8, further comprising a Row Arbiter and a Row Buffer, connected to the asynchronous digital communication circuit of the pixels, and an external communication module, connected to the Row Arbiter and the Row Buffer, and wherein the pixel event is sent by:

- when at least one event is launched in a pixel, sending a row-wise $R_{gst}$ signal to the *Row Arbiter,* which is configured to determine the y-coordinate of said row and to reply by activating an *Ack* signal,
- sending all active pixels in the row a polarity signal ($p^+$ or $p^-$) to the *Row Buffer,* which is configured to store x-coordinates, and
- sending the x-coordinates, the polarity and the y-coordinate to the external communication module, which is configured to send them out of the sensitive DVS sensor.

10. The sensitive DVS sensor according to claim 8, wherein address events are sent out of the sensitive DVS sensor with micro to milli second delays.

11. The sensitive DVS sensor according to claim 8, further comprising a Classifier module and two output channels, a LR channel, providing absolute coordinates of LR macro-pixels (x, y, s), and a HR channel, providing relative coordinates within the HR region ($x-x_L$, $y-y_L$, s), and wherein the Classifier module comprises HR region limit coordinates and is configured to determine if an Address-Event (x,y,s) is in the HR region or LR region.

12. The sensitive DVS sensor according to claim 11, wherein the two output channels are merged and the Address-Event (x,y,s) further comprises a parameter 'r' to distinguish whether the event belongs to the LR region or HR region.

13. A method for vision sensing comprising the steps of:

- sensing light and converting it to voltage $V_{ph}$ by using the photoreceptor stage;
- pre-amplifying the received voltage by using the trans-impedance preamplification stage;
- duplicating the pre-amplified voltage by using the trans-impedance preamplification stage;
- if the pixel is not a master pixel, the switch $s_{wla}$ is OFF and the switch $s_{wlb}$ is ON, sending one of the duplicated voltages to the first and second pixel memory bits;
- if the pixel is a master pixel, the switch $s_{wla}$ is ON and the switch $s_{wlb}$ is OFF, receiving a signal from the first and second pixel memory bits of one or more neighbor pixels representing a summed voltage from the rest of pixels of the macro pixel;
- if the pixel is not a master pixel, amplifying the other duplicated voltage by using the one or more stacked diodes of the trans-impedance preamplification stage;
- if the pixel is a master pixel, amplifying the summed voltage from the rest of pixels of the macro pixel;
- sending the amplified voltage to the buffer stage if the pixel is a master pixel, the switch $s_{wr}$ is set permanently ON, or if the pixel is not a master pixel and switch $s_{wr}$ is ON, otherwise, if the switch $s_{wr}$ is OFF, resetting the amplified voltage;
- sending the amplified voltage to the amplification stage of the contrast computation module (c);
- amplifying the voltage by $C_1/C_2$;
- resetting the voltage to $V_{REF}$ whenever the voltage $V_{diff}$ reaches an upper threshold $V^+$ or a lower threshold $V^-$; and
- launching a sending of event by the differentiation stage: an ON event when the voltage $V_{diff}$ reaches an upper threshold $V^+$ and an OFF event when the voltage $V_{diff}$ reaches a lower threshold $V^-$;

**14.** The method for vision sensing according to claim 13, wherein two versions of the global bias signals $V_{REF}$ are provided: $(V_{REF_{LR}}, V_{\theta LR}^{+}, V_{\theta LR}^{-})$ and $(V_{REF_{HR}}^{\theta}, V_{\theta HR}^{+}, V_{\theta HR}^{-})$, such that if the signal coming out of the first or second pixel memory bits (T OR R) is high, the HR version biases $(V_{REF_{HR}}, V_{\theta HR}^{+}, V_{\theta HR}^{-})$ is selected for the comparators in the contrast computation circuit and, if the signal coming out of the first or second pixel memory bits (T OR R) is low, the LR version biases $(V_{REF_{LR}}, V_{\theta LR}^{+}, V_{\theta LR}^{-})$ is selected.

FIG. 1

(a)                    (b)

FIG. 2

FIG. 3

SLOW:

FAST:

**FIG. 4**

$I_{ph}$ → **Ph R** → $V_{ph} = V_A \log(I_{ph})$ → **CD** → ON / OFF → **Dig. comm.** → $p^+$ $p^-$ → *Rqst* / *Ack*

**FIG. 5**

$V_{ph}=V_A log(I_{ph})$

**(a)**

$V_G$   $V_{GA}$

$I_{ph}$   $V_{ph}=NV_A log(I_{ph})$   $N$

$A_l I_{ph}$

**(b)**

**FIG. 6**

**FIG. 7**

**FIG. 8**

**FIG. 9**

FIG. 10

FIG. 11

FIG. 12

## Array of LR macro-pixels

$(x_L, y_L, x_H, y_H)$

**Controller**

**LR/ROI Classifier**

LR          HR

$(x,y,s)$
$(x',y',s)$

**Merger (optional)**

$(x,y,s,r)$

$x'=x-x_L$   $y'=y-y_L$

**FIG. 13**

**FIG. 14**

**FIG. 15**

FIG. 16

Europäisches
Patentamt

European
Patent Office

Office européen
des brevets

# EUROPEAN SEARCH REPORT

**Application Number**

EP 24 38 2709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ES 2 938 285 A1 (CONSEJO SUPERIOR INVESTIGACION [ES]; UNIV SEVILLA [ES]) 5 April 2023 (2023-04-05) | 1,2,5-13 | INV. H04N25/47 H04N25/46 |
| A | * page 9, line 12 - page 18, line 9; figures 4,5,9,11-14 * | 3,4,14 | |
| | ----- | | |
| A | US 2024/015413 A1 (MIKKOLA ESKO [US] ET AL) 11 January 2024 (2024-01-11) * paragraph [0064] * | 3,4 | |
| | ----- | | |
| A | US 2024/015412 A1 (TSUCHIMOTO KOYA [JP] ET AL) 11 January 2024 (2024-01-11) * paragraph [0194] - paragraph [0199] * | 14 | |
| | ----- | | |

**TECHNICAL FIELDS SEARCHED (IPC)**

H04N

The present search report has been drawn up for all claims

| Place of search | Date of completion of the search | Examiner |
|---|---|---|
| Munich | 14 August 2024 | Penchev, Petyo |

EPO FORM 1503 03.82 (P04C01)

## ANNEX TO THE EUROPEAN SEARCH REPORT
## ON EUROPEAN PATENT APPLICATION NO.

EP 24 38 2709

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2024

| Patent document cited in search report | | Publication date | Patent family member(s) | | Publication date |
|---|---|---|---|---|---|
| ES 2938285 | A1 | 05-04-2023 | ES | 2938285 A1 | 05-04-2023 |
| | | | WO | 2023057666 A1 | 13-04-2023 |
| US 2024015413 | A1 | 11-01-2024 | NONE | | |
| US 2024015412 | A1 | 11-01-2024 | CN | 112912775 A | 04-06-2021 |
| | | | JP | 2020088676 A | 04-06-2020 |
| | | | KR | 20210095865 A | 03-08-2021 |
| | | | US | 2024015412 A1 | 11-01-2024 |
| | | | WO | 2020110743 A1 | 04-06-2020 |

EPO FORM P0459

For more details about this annex : see Official Journal of the European Patent Office, No. 12/82